(19) Europäisches Patentamt
European Patent Office
Office européen des brevets

(11) **EP 1 972 176 B1**

(12) **FASCICULE DE BREVET EUROPEEN**

(45) Date de publication et mention
de la délivrance du brevet:
**29.08.2012 Bulletin 2012/35**

(51) Int Cl.:
***H04W 36/00*** (2009.01)

(21) Numéro de dépôt: **07717724.4**

(22) Date de dépôt: **09.01.2007**

(86) Numéro de dépôt international:
**PCT/FR2007/050627**

(87) Numéro de publication internationale:
**WO 2007/080348 (19.07.2007 Gazette 2007/29)**

(54) **PROCEDES ET TERMINAUX DE COMMUNICATION POUR AMELIORER LE TRANSFERT DE CONNEXION ENTRE DES CELLULES APPARTENANT A DES RESEAUX DIFFERENTS**

KOMMUNIKATIONSVERFAHREN UND ENDGERÄTE ZUR VERBESSERUNG DER VERBINDUNGSÜBERTRAGUNG ZWISCHEN ZELLEN VERSCHIEDENER NETZE

COMMUNICATION METHODS AND TERMINALS FOR IMPROVING THE TRANSFER OF CONNECTION BETWEEN CELLS BELONGING TO DIFFERENT NETWORKS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **10.01.2006 FR 0650079**

(43) Date de publication de la demande:
**24.09.2008 Bulletin 2008/39**

(73) Titulaire: **FRANCE TELECOM
75015 Paris (FR)**

(72) Inventeurs:
• **DAOUD-TRIKI, Khadija**
**F-92130 Issy Les Moulineaux (FR)**
• **ZOUAOUI, Rida**
**F-92230 Gennevilliers (FR)**
• **OBADIA, Lionel**
**F-75011 Paris (FR)**

(74) Mandataire: **Delumeau, François Guy et al
Cabinet Beau de Loménie
158, rue de l'Université
75340 Paris Cedex 07 (FR)**

(56) Documents cités:
**EP-A- 1 395 077       FR-A- 2 863 133
US-A1- 2003 050 063    US-A1- 2003 134 650
US-A1- 2004 063 426**

• **"Digital cellular telecommunications system (Phase 2+); Generic access to the A/Gb interface; Stage 2 (3GPP TS 43.318 version 6.4.0 Release 6); ETSI TS 143 318" ETSI STANDARDS, EUROPEAN TELECOMMUNICATIONS STANDARDS INSTITUTE, SOPHIA-ANTIPO, FR, vol. 3-G1, no. V640, novembre 2005 (2005-11), XP014032918 ISSN: 0000-0001 cité dans la demande**

**Description**

Arrière-plan de l'invention

Le domaine de l'invention est celui des télécommunications et plus précisément celui des réseaux de télécommunication cellulaires.

Dans ce document, on distinguera deux types de réseaux cellulaires, à savoir :

- les réseaux cellulaires fonctionnant dans une bande de fréquence allouée à au moins un opérateur de télécommunication et dont l'usage est réservé à l'autorisation de ces opérateurs. Il s'agit notamment des réseaux cellulaires de deuxième génération GERAN (GSM Edge Radio Access Network), de troisième génération UTRAN (UMTS Terrestrial Radio Access Network), ou autres AMPS, D-AMPS, etc. ;
- les réseaux cellulaires formés par les réseaux locaux de télécommunication raccordés à au moins un réseau cellulaire appartenant au premier type. Il s'agit notamment des réseaux locaux domestiques gérés par une architecture de type GAN (Generic Access Network) telle que définie par la Release 6 du 3GPP. Ces réseaux locaux ne se limitent pas aux réseaux locaux de télécommunication sans fil fonctionnant dans des bandes de fréquence publiques non allouées à des opérateurs, mais concernent également les réseaux locaux filaires, par exemple de type Ethernet. Dans toute la suite du document, on désignera ces réseaux par le terme « réseaux locaux ».

Nous rappelons tout d'abord que l'architecture des réseaux cellulaires publics est une architecture dans laquelle des stations de base (en anglais "Base Transceiver Station", BTS, pour les réseaux GERAN et "Node B" pour les réseaux UTRAN) sont contrôlées par des contrôleurs ("Base Station Controller", BSC, pour les réseaux GERAN et "Radio Network Controller", RNC, pour les réseaux UTRAN) connectés à un réseau coeur "circuit" et à un réseau coeur "paquet".

Dans les réseaux cellulaires GAN, les cellules GAN sont définies par des points d'accès (en anglais Access Point AP) permettant aux utilisateurs d'accéder à des services mobiles via une connexion IP (Internet Protocol) établie avec un élément du réseau, appelé « contrôleur GANC (GAN controller) », en charge du contrôle des points d'accès. Un point d'accès constitue ainsi une entité physique permettant au mobile de se connecter au contrôleur GANC par une liaison IP.

Conformément à la norme précitée, les contrôleurs GANC du réseau GAN sont raccordés au réseau coeur du réseau cellulaire GERAN et sont vus de ce réseau coeur comme un contrôleur BSC de l'architecture cellulaire GERAN.

Les réseaux GAN permettent d'étendre la couverture des réseaux de deuxième génération à travers le déploiement de ces points d'accès. Ainsi, l'utilisateur, notamment dans un usage résidentiel, peut continuer à accéder aux services des réseaux cellulaires publics GERAN à travers son point d'accès au réseau local, et non via la station de base du réseau public GERAN.

L'invention s'intéresse plus particulièrement au mécanisme connu de "handover", à savoir le mécanisme de transfert de connexion géré par le réseau durant une communication, ce mécanisme garantissant la continuité de service d'un terminal en situation de mobilité d'une cellule d'attachement vers une cellule voisine.

De façon connue, le transfert de connexion d'un mobile entre deux cellules GERAN ou entre une cellule GERAN et une cellule UTRAN est géré par les contrôleurs BSC ou RNC. Le transfert peut être déclenché sur la base de niveaux de signaux de la cellule d'attachement du mobile et de ses cellules voisines, ces niveaux étant mesurés par le terminal mobile et remontés au réseau.

Par exemple, dans le cas d'un réseau GERAN, le mobile remonte le niveau de sa cellule d'attachement et des six meilleures cellules GERAN voisines. Le contrôleur BSC, en recevant ces mesures, peut décider de transférer le mobile vers une autre cellule qui deviendra alors cellule d'attachement. L'algorithme de transfert de connexion se base sur une comparaison du niveau de la cellule d'attachement courante avec un seuil configuré dans le réseau. Si ce niveau est en dessous du seuil, la future cellule d'attachement sera celle qui a le plus haut niveau de signal, à condition que son niveau soit en dessus du seuil.

Quand un mobile est sous couverture de deux réseaux GERAN et UTRAN et qu'il est attaché au réseau d'accès GERAN, les identités des cellules voisines GERAN et UTRAN sont transmises par le contrôleur BSC au terminal mobile dans un message d'information. Le terminal mobile remonte périodiquement les niveaux des signaux des six meilleures cellules voisines.

Quand le mobile est sous couverture de deux réseaux GERAN et UTRAN et qu'il est attaché au réseau d'accès UTRAN, il remonte les niveaux des cellules voisines soit périodiquement, soit lorsqu'un événement est vérifié, le type de cet événement déclencheur étant envoyé par le contrôleur RNC au terminal mobile.

La norme définit plusieurs événements dont quatre pour les mesures effectuées sur différents types de réseaux d'accès:

- Event 3A : la qualité estimée de la fréquence UTRAN courante est en dessous d'un certain seuil et la qualité estimée sur l'autre système (par exemple GERAN) est en dessus d'un certain seuil.
- Event 3B : la qualité estimée sur l'autre système (par exemple GERAN) est en dessous d'un certain seuil.
- Event 3C : la qualité estimée sur l'autre système (par exemple GERAN) est en dessus d'un certain seuil.
- Event 3D : changement de la meilleure cellule dans l'autre système (par exemple GERAN).

De façon normalisée, une cellule GAN est configurée dans les contrôleurs BSC et RNC des réseaux cellulaires publics comme une cellule voisine de type GERAN. En conséquence, le mécanisme de transfert de connexion entre une cellule GAN et une cellule GERAN, respectivement entre une cellule GAN et une cellule UTRAN, se déroule sensiblement de la même façon qu'un transfert de connexion au sein d'un réseau GERAN, respectivement qu'un transfert de connexion entre un réseau GERAN et un réseau UTRAN.

La norme 3GPP TS 43.318: "Generic access to the A/Gb interface", Stage 2, v6.3.0" donne la possibilité à l'utilisateur d'exprimer sa préférence en termes de réseau d'attachement. Cette préférence, aussi appelée mode, peut être choisie parmi :

- Mode "GAN preferred" : l'utilisateur souhaite accéder aux services mobiles à travers le réseau d'accès GAN dès que celui-ci est disponible. S'il ne l'est pas, il utilisera le réseau d'accès disponible (GERAN ou UTRAN).
- Mode "GERAN/UTRAN preferred" : l'utilisateur souhaite accéder aux services mobiles à travers le réseau d'accès GERAN ou UTRAN dès que ceux-ci sont disponibles. S'ils ne le sont pas, il utilisera le GAN.
- Mode "GERAN/UTRAN only" : l'utilisateur souhaite accéder aux services mobiles uniquement à travers les réseaux d'accès GERAN ou UTRAN.
- Mode "GAN only" : l'utilisateur souhaite accéder aux services mobiles uniquement à travers le réseau d'accès GAN.

Malheureusement, la spécification 3GPP 43.318 ne permet pas d'implémenter la préférence "mode GERAN/UTRAN preferred" puisqu'elle prévoit, lorsqu'un mobile est sous la double couverture d'un réseau GAN et d'un réseau cellulaire public, de remonter au réseau un niveau de signal maximum pour la cellule GAN, c'est-à-dire un niveau de signal fictif de valeur 63, de sorte que la cellule GAN est systématiquement prioritaire par rapport aux cellules des réseaux cellulaires publics, et donc automatiquement choisie par le réseau comme cellule cible pour le transfert de connexion.

De même, conformément à la norme, lorsqu'un terminal mobile est sous double couverture d'un réseau cellulaire public et d'un réseau GAN, et que son réseau d'attachement est le réseau GAN, le transfert de connexion ne tient pas compte de la préférence de l'utilisateur. Le transfert peut être déclenché soit par le réseau, soit par le terminal mobile.

Quand le handover est déclenché par le réseau, celui-ci envoie le message GA-CSR UPLINK QUALITY INFORMATION au mobile. La norme 44.318 mentionne que quand le message GA-CSR UPLINK QUALITY INFORMATION indique une qualité de type "radio problem", ou "undetermined problem", le mobile doit resélectionner un autre AP (rester en intra GAN), pour les autres types de qualité le mobile doit déclencher un handover vers le GERAN/UTRAN en envoyant le message GA-CSR HANDOVER INFORMATION qui contiendra la liste des cellules GERAN et UTRAN voisines avec leur niveau de signal. Quand le handover est déclenché par le mobile, celui-ci envoie directement un message GA-CSR HANDOVER INFORMATION au réseau.

Ce mécanisme ne permet pas d'implémenter le mode "GERAN/UTRAN preferred" puisque le déclenchement de transfert de connexion se fait indépendamment de la préférence de l'utilisateur.

Objet et résumé de l'invention

La présente invention offre une solution permettant de respecter les préférences d'un utilisateur ayant choisi de privilégier, en situation de mobilité, l'attachement de son terminal mobile à une cellule d'un réseau cellulaire public par rapport à une cellule d'un réseau cellulaire local.

L'invention permet ainsi l'implémentation du mode "GERAN/UTRAN preferred" prévu par la norme 3GPP précitée.

Ainsi et selon un premier aspect, l'invention concerne un procédé d'attribution d'un niveau de signal pouvant être mis en oeuvre dans un terminal mobile connecté à une station de base permettant de définir une cellule d'attachement de ce terminal à un réseau cellulaire public d'attachement, le terminal étant configuré pour privilégier son attachement à un réseau cellulaire public par rapport à son attachement à un réseau local. Ce procédé comporte :

- une étape de détection de la présence d'un point d'accès actif d'un réseau local, et le cas échéant, une étape d'attribution d'un niveau de signal fictif à une cellule définie au moins par ce point d'accès ;
- une étape de mesure du niveau de signal de la cellule d'attachement et des cellules de réseaux cellulaires publics voisines de cette cellule d'attachement ;
- une étape d'envoi, à la station de base, du niveau de signal fictif et des niveaux de signaux mesurés, ces niveaux étant utilisés par le réseau d'attachement pour gérer le transfert de connexion du terminal de la cellule d'attachement vers une des cellules voisines précitées ou vers la cellule définie au moins par le point d'accès, pour garantir une continuité de service en situation de mobilité du terminal,

Dans ce procédé, le niveau de signal fictif est attribué en fonction d'un seuil mémorisé dans le terminal, ce seuil étant un seuil à partir duquel une cellule d'un réseau cellulaire public peut être candidate pour le transfert de connexion.

Dans un mode particulier de réalisation, le seuil précité est configuré dans le terminal mobile.

De façon préféré, le procédé d'attribution selon l'invention comporte une étape de réception de ce seuil en provenance dudit réseau d'attachement. Cette caractéristique permet avantageusement de faire varier ce seuil dynamiquement, par exemple en fonction des conditions de transmission du réseau d'attachement.

Corrélativement, l'invention concerne un terminal mobile comportant :

- des moyens de connexion à une station de base permettant de définir une cellule d'attachement du terminal à un réseau cellulaire public d'attachement ;
- des moyens de connexion à un point d'accès permettant de définir une cellule d'attachement du terminal à un réseau local ;
- des moyens de configuration pour privilégier son attachement à un réseau cellulaire public par rapport à son attachement à un réseau local ;
- des moyens de détection de la présence d'au moins un point d'accès actif d'un réseau local ;
- des moyens d'attribution d'un niveau de signal fictif à une cellule définie au moins par ce point d'accès ;
- des moyens de mesure du niveau de signal de la cellule d'attachement et des cellules de réseaux cellulaires publics voisines de cette cellule d'attachement ;
- des moyens d'envoi, à la station de base, du niveau de signal fictif et des niveaux de signaux mesurés, ces niveaux étant utilisés par le réseau d'attachement pour gérer le transfert de connexion du terminal de la cellule d'attachement vers une des cellules voisines précitées ou vers la cellule définie au moins par le point d'accès, pour garantir une continuité de service en situation de mobilité du terminal,

Dans ce terminal, le niveau de signal fictif est attribué en fonction d'un seuil mémorisé dans le terminal, ce seuil étant un seuil à partir duquel une cellule d'un réseau cellulaire public peut être candidate pour le transfert de connexion.

Ainsi, le procédé d'attribution et le terminal selon l'invention attribuent un niveau de signal fictif à la cellule du réseau local de façon à respecter la préférence de l'utilisateur lorsque celui-ci choisit de privilégier l'attachement à un réseau cellulaire public.

En particulier, la cellule du réseau local définie au moins par le point d'accès est moins prioritaire que la cellule d'attachement et que ses voisines, si il existe au moins une de ces cellules dont le niveau de signal est supérieur au seuil précité.

L'invention trouve une application privilégiée pour la gestion du handover dans le réseau GAN, GERAN et/ou UTRAN.

La solution de l'invention est particulièrement avantageuse en ce qu'elle minimise les modifications à apporter aux algorithmes de transfert de connexion normalisé dans les contrôleurs RNC et BSC.

On rappelle que dans ce réseau les cellules GAN sont configurées dans les contrôleurs BSC ou RNC comme une cellule voisine de type GERAN.

Ainsi, dans un mode particulier de réalisation de l'invention, lorsque la cellule d'attachement est une cellule d'un réseau cellulaire public UTRAN, le niveau de signal fictif Lev41 est choisi tel que :

$$T\_GERAN \leq Lev41 \leq max\,[T\_GERAN,\,min(List\_GERAN) - 1],$$

où :

- T_GERAN est un niveau de seuil à partir duquel une cellule d'un réseau cellulaire public GERAN peut être candidate pour le transfert de connexion ;
- List_GERAN est l'ensemble des niveaux de signaux des cellules d'un réseau cellulaire public GERAN voisines de la cellule d'attachement et dont le niveau de signal est supérieur à T_GERAN ; et
- min(List_GERAN) est la valeur minimale de l'ensemble List_GERAN.

Lorsque l'ensemble List_GERAN est vide, la valeur min(List_GERAN) est choisie égale à 0.

De façon similaire, dans un mode particulier de réalisation de l'invention, lorsque la cellule d'attachement est une cellule d'un réseau cellulaire public GERAN ne possédant pas de cellule voisine d'un réseau cellulaire public UTRAN dont le niveau de signal est supérieur ou égal à un seuil à partir duquel une cellule d'un réseau cellulaire public UTRAN peut être candidate pour le transfert de connexion, le signal fictif est choisi tel que :

$$T\_GERAN \leq Lev41 \leq \max [T\_GERAN, \min(List\_GERAN) - 1].$$

De façon similaire, dans un mode particulier de réalisation de l'invention, lorsque la cellule d'attachement est une cellule d'un réseau cellulaire public GERAN possédant au moins une cellule voisine d'un réseau cellulaire public UTRAN dont le niveau de signal est supérieur ou égal à un seuil à partir duquel une cellule d'un réseau cellulaire public UTRAN peut être candidate pour le transfert de connexion, le niveau de signal fictif Lev41 est choisi tel que :

$$Lev41 < T\_GERAN.$$

Selon un autre aspect, l'invention concerne un procédé de déclenchement d'un transfert de connexion pouvant être mis en oeuvre dans un terminal mobile connecté à un point d'accès permettant de définir une cellule d'attachement du terminal à un réseau local, le terminal étant configuré pour privilégier son attachement à un réseau cellulaire public par rapport à son attachement à un réseau local.

Ce procédé comporte :

- une étape de détection d'au moins un réseau cellulaire public ;
- une étape de mesure du niveau de signal des cellules de réseaux cellulaires publics voisines de la cellule d'attachement.

Un tel procédé est remarquable en ce qu'il comporte également:

- une étape de comparaison des niveaux mesurés avec un seuil prédéterminé ; et si au moins un des niveaux mesurés est supérieur à un seuil,
- une étape de déclenchement de transfert de connexion par envoi au point d'accès des niveaux de signaux mesurés, ces niveaux étant utilisés par le réseau local pour gérer le transfert de connexion du terminal vers une desdites cellules voisines pour garantir une continuité de service en situation de mobilité dudit terminal.

Corrélativement, l'invention concerne un terminal mobile comportant :

- des moyens de connexion à un point d'accès permettant de définir une cellule d'attachement du terminal à un réseau local ;
- des moyens de connexion à une station de base permettant de définir une cellule d'attachement du terminal à un réseau cellulaire public d'attachement ;
- des moyens de détection d'au moins un réseau public ;
- des moyens de configuration pour privilégier son attachement à un réseau cellulaire public par rapport à son attachement à un réseau local ;
- des moyens de mesure du niveau de signal des cellules de réseaux cellulaires publics voisines de la cellule d'attachement ;
- des moyens de comparaison du niveau avec un seuil prédéterminé ; et si au moins un des niveaux mesurés est supérieur à un seuil,
- des moyens de déclenchement de transfert de connexion par envoi au point d'accès des niveaux de signaux mesurés, ces niveaux étant utilisés par le réseau local pour gérer le transfert de connexion du terminal vers une desdites cellules voisines pour garantir une continuité de service en situation de mobilité du terminal.

Ainsi, le procédé de déclenchement et le terminal mobile selon l'invention permettent d'implémenter le mode "GERAN/UTRAN preferred" lorsque le terminal mobile est attaché à un réseau GAN en choisissant de remonter au réseau les niveaux de signaux des cellules des réseaux cellulaires publics dès lors qu'elles sont supérieures à un seuil prédéterminé.

Dans un mode particulier de réalisation, les différentes étapes du procédé d'attribution et/ou du procédé de déclenchement sont déterminées par des instructions de programmes d'ordinateurs.

En conséquence, l'invention vise aussi un programme d'ordinateur sur un support d'informations, ce programme étant susceptible d'être mis en oeuvre dans un terminal mobile ou plus généralement dans un ordinateur, ce programme comportant des instructions adaptées à la mise en oeuvre des étapes d'un procédé d'attribution et/ou d'un procédé de déclenchement tels que mentionnés.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente un terminal mobile conforme à l'invention dans son environnement ;
- la figure 2 représente, de façon schématique, un terminal mobile conforme à l'invention ; et
- la figure 3 représente, sous forme d'organigramme, les principales étapes d'un procédé d'attribution et d'un procédé de déclenchement conformes à l'invention dans un mode préféré de réalisation.

Description détaillée d'un mode de réalisation

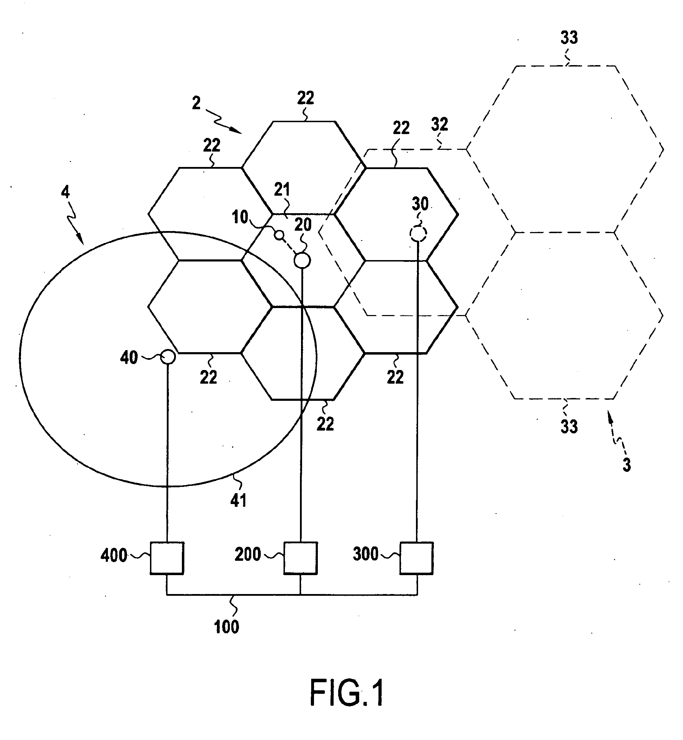

La **figure 1** représente un terminal mobile 10 conforme à l'invention dans son environnement.

Dans l'exemple décrit ici, le terminal mobile 10 sera connecté à une station de base permettant de définir une cellule d'attachement de ce terminal à un réseau cellulaire d'attachement.

Dans cet exemple, le réseau cellulaire d'attachement peut être un réseau cellulaire public GERAN 2 ou un réseau cellulaire public UTRAN 3 ou un réseau local.

Sur cette figure, nous avons référencé 21 une cellule du réseau cellulaire public GERAN 2, cette cellule étant définie par une station de base 20.

Nous avons référencé 22 deux cellules du réseau cellulaire GERAN 2 voisines de la cellule GERAN 21.

Sur cette figure, nous avons aussi représenté une cellule 32 d'un réseau cellulaire public UTRAN 3, cette cellule 32 étant définie par une station de base 30. On a aussi représenté deux cellules 33 du réseau cellulaire public UTRAN 3 voisines de la cellule UTRAN 32 et de la cellule GERAN 21.

La référence 4 désigne un réseau local de type GAN dont une cellule 41 est définie au moins par le point d'accès 40.

Les stations de base 20 et 30 des réseaux GERAN 2 et UTRAN 3 sont respectivement contrôlées et gérées par un contrôleur BSC 200 et un contrôleur RNC 300.

Le point d'accès 40 est contrôlé par un contrôleur GANC 400. Les contrôleurs BSC 200, RNC 300 et GANC 400 sont connectés à un réseau coeur circuit et à un réseau coeur paquet portant la référence générale 100.

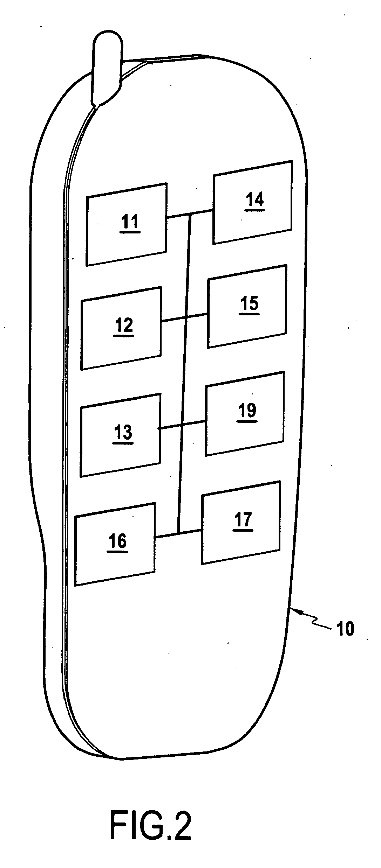

La **figure** 2 représente de façon schématique un terminal mobile 10 conforme à l'invention dans un mode de réalisation.

Ce terminal 10 comporte un processeur 11, une mémoire morte 12, une mémoire vive 17 et une mémoire non volatile réinscriptible de type flash 13.

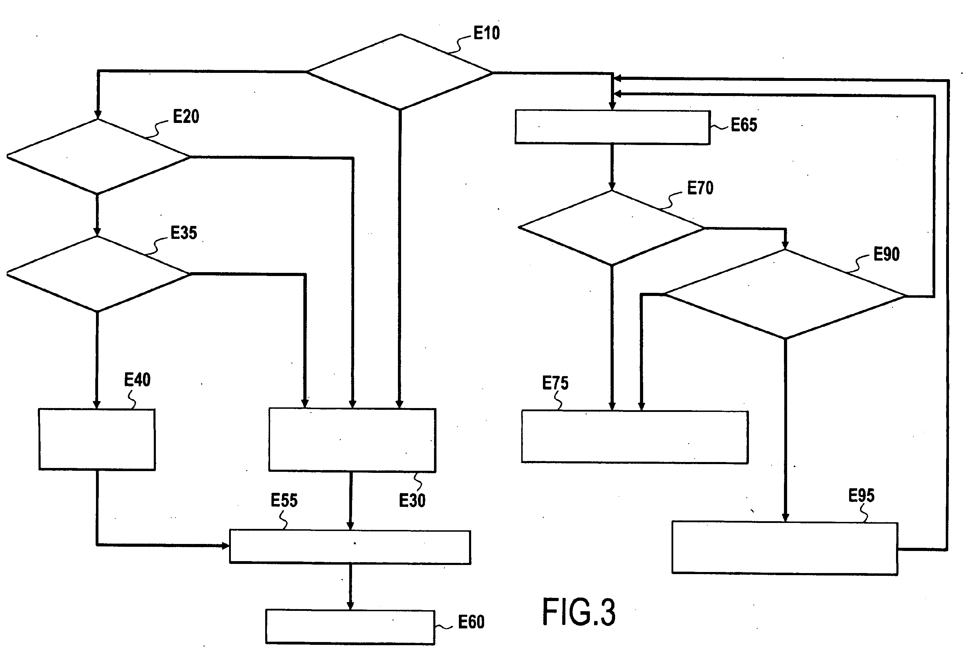

La mémoire morte 12 mémorise un programme d'ordinateur comportant des instructions pour l'exécution des étapes du procédé d'attribution conforme à l'invention et pour l'exécution des étapes du procédé de déclenchement conforme à l'invention, ces étapes étant représentées sous forme d'organigramme à la figure 3.

Le terminal mobile 10 comporte des moyens 14 de connexion à la station de base 20 du réseau GERAN 2 et à la station de base 30 du réseau UTRAN 3.

Ces moyens 14 de connexion sont adaptés à détecter les réseaux GERAN 2 et UTRAN 3, à mesurer le niveau de signal de la cellule d'attachement du terminal 10 au réseau GERAN 2 ou UTRAN 3 et le niveau de signal de cellules de réseaux cellulaires publics voisines de cette cellule d'attachement.

Le terminal 10 comporte également des moyens 15 de connexion au point d'accès 40 et des moyens 19 de connexion et d'enregistrement au contrôleur GANC 400.

Ces moyens 15 de connexion sont adaptés à détecter la présence d'un point d'accès 40 actif du réseau local GAN 4.

La mémoire non volatile réinscriptible 13 est adaptée à mémoriser une configuration par laquelle l'utilisateur choisit le mode d'utilisation du terminal, cette configuration pouvant être représentative du fait que l'utilisateur souhaite privilégier l'attachement de son terminal 10 à un réseau cellulaire public GERAN 2 ou UTRAN 3 par rapport à son attachement au réseau local GAN 4.

Dans le mode de réalisation décrit ici, la mémoire non volatile réinscriptible 13 mémorise :

- une valeur T_GERAN égale au niveau du seuil à partir duquel une cellule 21, 22 du réseau cellulaire public GERAN 2 peut être candidate pour le transfert de connexion ; et
- une valeur T_UTRAN égale au niveau du seuil à partir duquel une cellule 31, 32 du réseau cellulaire public UTRAN 3 peut être candidate pour le transfert de connexion.

Dans le mode particulier de réalisation décrit ici, ces valeurs T_GERAN et T_UTRAN sont reçues en provenance du réseau d'attachement. Elles sont susceptibles de varier en fonction de conditions de transmission dans ce réseau.

Le processeur 11 est adapté à attribuer un niveau de signal fictif à une cellule définie au moins par le point d'accès 40 en mettant en oeuvre le programme d'ordinateur mémorisé dans la mémoire morte 12.

Lorsque le terminal 10 est attaché à une station de base 20 du réseau GERAN 2 ou à une station de base 30 du réseau UTRAN 3, les moyens 14 de connexion sont adaptés à envoyer, à cette station de base, le signal fictif attribué par le processeur 11 et les niveaux de signaux mesurés par les moyens 14 de connexion à une station de base.

Le processeur 11 est également adapté à comparer un niveau de signal avec un seuil prédéterminé.

Lorsque le terminal mobile est connecté à un point d'accès 40 du réseau GAN 4, les moyens 14 de connexion à ce point d'accès sont adaptés à envoyer des niveaux de signaux mesurés à ce point d'accès.

En référence à la **figure 3**, nous allons maintenant décrire les principales étapes du programme d'ordinateur mémorisé dans la mémoire morte 12. Ce programme est adapté à mettre en oeuvre le procédé d'attribution et le procédé de déclenchement selon l'invention dans un mode particulier de réalisation.

Nous supposerons dans la suite de la description que le terminal 10 est en situation de mobilité, dans une zone couverte par la station de base 20, la station de base 30, et le point d'accès 40.

Au cours d'une première étape E10, le terminal 10 détermine quel est son réseau d'attachement.

Si le terminal 10 est connecté à la station de base 20, son réseau d'attachement est le réseau GERAN 2, et l'étape E10 de détermination est suivie par un test E20 au cours duquel le terminal 10 détermine s'il est à proximité de cellules 32, 33 du réseau cellulaire public UTRAN 3 voisines de sa cellule d'attachement 21. Si ce n'est pas le cas, le résultat du test E20 est négatif. Ce test est alors suivi par une étape E30 au cours de laquelle le processeur 11 du terminal 10 attribue le niveau de signal fictif T_GERAN à la cellule 41 définie au moins par le point d'accès 40, cette valeur T_GERAN étant lue dans la mémoire non volatile réinscriptible 13.

Si au cours du test E20, le terminal mobile 10 détermine qu'il existe au moins une cellule 32, 33 du réseau cellulaire UTRAN 3 voisine de sa cellule d'attachement 21, le résultat du test E20 est positif.

Ce test est alors suivi par un test E35 au cours duquel le terminal mobile 10 détermine si au moins une de ces cellules 32, 33 a un niveau de signal supérieur ou égal au seuil T_UTRAN à partir duquel une cellule du réseau cellulaire public UTRAN 3 peut être candidate pour le transfert de connexion.

Si aucune cellule ne remplit ce critère, le résultat du test E35 est positif, et ce test est suivi par l'étape E30 déjà décrite au cours de laquelle le processeur 11 attribue le niveau de signal fictif T_GERAN à la cellule 41 définie au moins par le point d'accès 40.

Si au moins une cellule 32, 33 du réseau cellulaire UTRAN 3 voisine de la cellule d'attachement 21 a un niveau de signal supérieur ou égal à la valeur T_UTRAN, le résultat du test E35 est négatif.

Ce test est alors suivi par une étape E40 au cours de laquelle le processeur 11 attribue le niveau de signal fictif T_GERAN-1 à la cellule 41 définie au moins par le point d'accès 40.

Si au cours de l'étape E10, le terminal 10 détermine qu'il est connecté à la station de base 30, c'est-à-dire qu'il est attaché à la cellule 32 du réseau UTRAN 3, l'étape E10 est suivie par l'étape E30 déjà décrite au cours de laquelle le processeur 11 attribue le niveau de signal fictif T_GERAN à la cellule 41 définie au moins par le point d'accès 40.

Les étapes E30 et E40 d'attribution d'un niveau de signal fictif sont suivies par une étape E55 au cours de laquelle les moyens 14 de connexion du terminal 10 aux stations de base 20, 30 mesurent le niveau de signal de la cellule d'attachement 21 ou 31 et le niveau des cellules des réseaux cellulaires publics voisines de cette cellule d'attachement.

Le niveau de signal fictif de la cellule 41 et tous ces niveaux de signaux mesurés sont ordonnés en commençant par le niveau maximum et envoyés à la station de base d'attachement du terminal 10 au cours d'une étape E60. Ces signaux sont utilisés par le réseau d'attachement GERAN 2 ou UTRAN 3 pour gérer le transfert de connexion du terminal 10 vers une cellule voisine de cette cellule d'attachement ou vers la cellule 41 définie au moins par le point d'accès 40 de façon à garantir la continuité de service en situation de mobilité du terminal 10.

Si au cours de l'étape E10 le terminal 10 détermine qu'il est connecté au point d'accès 40, c'est-à-dire qu'il est attaché à une cellule 41 du réseau local GAN 4, il met en oeuvre une étape E65, similaire à l'étape E55 déjà décrite, au cours de laquelle les moyens 14 du terminal mobile 10 mesurent le niveau de signal des cellules 21, 22, 32, 33 des réseaux cellulaires publics GERAN 2 et UTRAN 3 voisines de la cellule d'attachement 41.

Cette étape de mesure E65 est suivie par un test E70 au cours duquel le processeur 11 du terminal 10 détermine si au moins un de ces niveaux mesurés est supérieur à un seuil (T_GERAN pour les cellules du réseau GERAN 2, T_UTRAN pour les cellules du réseau UTRAN 3) prédéterminé.

Si tel est le cas, le terminal mobile déclenche un transfert de connexion en envoyant, au cours d'une étape E75, un message GA-CSR HANDOVER INFORMATION qui contient la liste des cellules du réseau GERAN 2 et du réseau UTRAN 3 voisines de la cellule d'attachement 41 avec leur niveau de signal.

En revanche si au cours de l'étape E70, le terminal mobile 10 détermine qu'aucune des cellules des réseaux cellulaires publics GERAN 2 et UTRAN 3 voisines de la cellule d'attachement 41 a un niveau supérieur au seuil prédéterminé, le terminal mobile 10 doit rester attaché au réseau local GAN 4.

Aussi, le terminal 10 détermine, au cours d'une étape E90, s'il a reçu un message GA-CSR UPLINK QUALITY INFORMATION en provenance du réseau local 4. Si tel n'est pas le cas, cette étape E90 de détermination est suivie par l'étape E65 de mesure des niveaux des signaux des cellules des réseaux publics déjà décrite.

Si au cours de l'étape E90, le terminal 10 détecte qu'il a reçu le message GA-CSR UPLINK QUALITY INFORMATION en provenance du réseau local 4, il se connecte à un autre point d'accès du réseau GAN 4 (étape E95) si ce message requiert un transfert de connexion au sein du réseau GAN 4. Cette étape de connexion est suivie par l'étape E65 de mesure des niveaux des signaux des cellules des réseaux publics déjà décrite.

En revanche, si ce message requiert un transfert de connexion vers le réseau cellulaire GERAN 2 ou le réseau UTRAN 3, le terminal mobile 10 déclenche le transfert de connexion vers le réseau cellulaire GERAN 2 ou UTRAN 3 en mettant en oeuvre l'étape E75 de déclenchement déjà décrite.

## Revendications

1. Procédé d'attribution d'un niveau de signal pouvant être mis en oeuvre dans un terminal mobile (10) connecté à une station de base (20) permettant de définir une cellule (21, 31) d'attachement dudit terminal (10) à un réseau cellulaire public d'attachement (2, 3), le terminal (10) étant configuré pour privilégier son attachement à un réseau cellulaire public (2, 3) par rapport à son attachement à un réseau local (4), ce procédé comportant :

   - une étape de détection de la présence d'un point d'accès (40) actif d'un réseau local (4), et le cas échéant, une étape (E30, E40) d'attribution d'un niveau de signal fictif (Lev41) à une cellule (41) définie au moins par ledit point d'accès (40) ;
   - une étape (E55) de mesure du niveau de signal (Lev21, Lev22, Lev32) de ladite cellule (21, 31) d'attachement et des cellules (22, 32) de réseaux cellulaires publics (2, 3) voisines de ladite cellule (21, 31) d'attachement ;
   - une étape (E60) d'envoi, à ladite station de base (20), dudit niveau de signal fictif (Lev41) et desdits niveaux de signaux mesurés (Lev21, Lev22, Lev32), ces niveaux (Lev41, Lev21, Lev22, Lev32) étant utilisés par ledit réseau d'attachement (2, 3) pour gérer le transfert de connexion dudit terminal (10) de ladite cellule d'attachement (21, 31) vers une desdites cellules voisines (22, 32) ou vers ladite cellule (41) définie au moins par ledit point d'accès (40), pour garantir une continuité de service en situation de mobilité dudit terminal (10),

   ledit procédé étant **caractérisé en ce que** ledit niveau de signal fictif (Lev41) est attribué en fonction d'un seuil (T_GERAN) mémorisé dans ledit terminal, ce seuil (T_GERAN) étant un seuil à partir duquel une cellule (22, 32) d'un réseau cellulaire public (2, 3) peut être candidate pour ledit transfert de connexion.

2. Procédé d'attribution selon la revendication 1, dans lequel ladite cellule (31) d'attachement est une cellule d'un réseau cellulaire public UTRAN (3) et dans lequel la cellule (41) définie au moins par ledit point d'accès (40) est considérée comme une cellule d'un réseau cellulaire public GERAN (2), **caractérisé en ce que** ledit niveau de signal fictif Lev41 est choisi tel que :

$$T\_GERAN \leq Lev41 \leq \max [T\_GERAN, \min(List\_GERAN) - 1],$$

où :

T_GERAN est un niveau de seuil à partir duquel une cellule (21, 22) d'un réseau cellulaire public GERAN (2) peut être candidate pour ledit transfert de connexion ;

- List_GERAN est l'ensemble des niveaux de signaux des cellules d'un réseau cellulaire public GERAN (2) voisines de ladite cellule d'attachement (31) et dont le niveau de signal est supérieur à T_GERAN ; et
- min(List_GERAN) est la valeur minimale de l'ensemble List_GERAN.

**3.** Procédé d'attribution selon la revendication 1, dans lequel ladite cellule (21) d'attachement est une cellule d'un réseau cellulaire public GERAN ne possédant pas de cellule voisine (32) d'un réseau cellulaire public UTRAN (3) dont le niveau de signal (Lev32) est supérieur ou égal à un seuil (T_UTRAN) à partir duquel une cellule (32) d'un réseau cellulaire public UTRAN (3) peut être candidate pour ledit transfert de connexion, et dans lequel la cellule (41) définie au moins par ledit point d'accès (40) est considérée comme une cellule d'un réseau cellulaire public GERAN (2) **caractérisé en ce que** ledit niveau de signal fictif Lev41 est choisi tel que :

$$T\_GERAN \leq Lev41 \leq \max [T\_GERAN, \min(List\_GERAN) - 1],$$

où :

T_GERAN est un niveau de seuil à partir duquel une cellule (21, 22) d'un réseau cellulaire public GERAN (2) peut être candidate pour ledit transfert de connexion ; et

- List_GERAN est l'ensemble des niveaux de signaux des cellules d'un réseau cellulaire public GERAN (2) voisines de ladite cellule d'attachement (21) et dont le niveau de signal est supérieur à T_GERAN ; et
- min(List_GERAN) est la valeur minimale de l'ensemble List_GERAN.

**4.** Procédé d'attribution selon la revendication 1, dans lequel ladite cellule (21) d'attachement est une cellule d'un réseau cellulaire public GERAN possédant au moins une cellule voisine (32) d'un réseau cellulaire public UTRAN (3) dont le niveau de signal (Lev32) est supérieur ou égal à un seuil (T_UTRAN) à partir duquel une cellule (32) d'un réseau cellulaire public UTRAN (3) peut être candidate pour ledit transfert de connexion, et dans lequel la cellule (41) définie au moins par ledit point d'accès (40) est considérée comme une cellule d'un réseau cellulaire public GERAN (2), **caractérisé en ce que** ledit niveau de signal fictif Lev41 est choisi tel que :

$$Lev41 < T\_GERAN,$$

où :

T_GERAN est un niveau de seuil à partir duquel une cellule (20, 22) d'un réseau cellulaire public GERAN (2) peut être candidate pour ledit transfert de connexion.

**5.** Procédé d'attribution selon l'une quelconque des revendications 1 à 4, **caractérisé en ce qu'**il comporte une étape de réception dudit seuil (T_GERAN) en provenance dudit réseau d'attachement (2, 3).

**6.** Terminal mobile comportant :

- des moyens (14) de connexion à une station de base (20) permettant de définir une cellule (21) d'attachement dudit terminal (10) à un réseau cellulaire public d'attachement (2) ;
- des moyens (15) de connexion à un point d'accès (40) permettant de définir une cellule (41) d'attachement dudit terminal (10) à un réseau local (4) ;

- des moyens (13) de configuration pour privilégier son attachement à un réseau cellulaire public (2, 3) par rapport à son attachement à un réseau local (4) ;
- des moyens (15) de détection de la présence d'au moins un point d'accès (40) actif d'un réseau local (4) ;
- des moyens (11) d'attribution d'un niveau de signal fictif (Lev41) à une cellule (41) définie au moins par ledit point d'accès (40) ;
- des moyens (14) de mesure du niveau de signal (Lev21, Lev22, Lev32) de ladite cellule (21) d'attachement et des cellules (22, 32) de réseaux cellulaires publics (2, 3) voisines de ladite cellule (21) d'attachement ;
- des moyens (14) d'envoi, à ladite station de base (20), dudit niveau de signal fictif (Lev41) et desdits niveaux de signaux mesurés (Lev21, Lev22, Lev32), ces niveaux (Lev41, Lev21, Lev22, Lev32) étant utilisés par ledit réseau d'attachement (2) pour gérer le transfert de connexion dudit terminal (10) de ladite cellule d'attachement (21, 31) vers une desdites cellules voisines (22, 32) ou vers ladite cellule (41) définie au moins par ledit point d'accès (40), pour garantir une continuité de service en situation de mobilité dudit terminal (10),

ledit terminal (10) étant **caractérisé en ce que** ledit niveau de signal fictif (Lev41) est attribué en fonction d'un seuil (T_GERAN) mémorisé dans ledit terminal, ce seuil (T_GERAN) étant un seuil à partir duquel une cellule (22, 32) d'un réseau cellulaire public (2, 3) peut être candidate pour ledit transfert de connexion.

7. Programme d'ordinateur comportant des instructions pour l'exécution des étapes du procédé d'attribution d'un niveau de signal selon l'une quelconque des revendications 1 à 5 lorsque ledit programme est exécuté par un ordinateur.

8. Support d'enregistrement lisible par un ordinateur sur lequel est enregistré un programme d'ordinateur comprenant des instructions pour l'exécution des étapes du procédé d'attribution d'un niveau de signal selon l'une quelconque des revendications 1 à 5.

9. Procédé de déclenchement d'un transfert de connexion pouvant être mis en oeuvre dans un terminal mobile (10) connecté à un point d'accès (40) permettant de définir une cellule (41) d'attachement dudit terminal (10) à un réseau local (4), le terminal (10) étant configuré pour privilégier son attachement à un réseau cellulaire public (2, 3) par rapport à son attachement à un réseau local (4), ce procédé comportant :

- une étape de détection d'au moins un réseau cellulaire public ;
- une étape (E65) de mesure du niveau de signal (Lev21, Lev22, Lev32, Lev33) des cellules (21, 22, 32, 33) de réseaux cellulaires publics (2, 3) voisines de ladite cellule (41) d'attachement ; ce procédé étant **caractérisé en ce qu'**il comporte également:
- une étape (E70) de comparaison desdits niveaux mesurés avec un seuil prédéterminé à partir duquel une cellule (22, 32) d'un réseau cellulaire public (2, 3) peut être candidate pour ledit transfert de connexion ; et si au moins un desdits niveaux mesurés (Lev21, Lev22, Lev32, Lev33) est supérieur audit seuil,
- une étape (E75) de déclenchement de transfert de connexion par envoi audit point d'accès (40) desdits niveaux de signaux mesurés (Lev21, Lev22, Lev32, Lev33), ces niveaux (Lev21, Lev22, Lev32, Lev33) étant utilisés par ledit réseau local (4) pour gérer le transfert de connexion dudit terminal (10) vers une desdites cellules voisines (21, 22, 32, 33) pour garantir une continuité de service en situation de mobilité dudit terminal (10).

10. Terminal mobile (10) comportant :

- des moyens (15) de connexion à un point d'accès (40) permettant de définir une cellule (41) d'attachement dudit terminal (10) à un réseau local (4) ;
- des moyens (14) de connexion à une station de base (20) permettant de définir une cellule (21) d'attachement dudit terminal (10) à un réseau cellulaire public d'attachement (2) ;
- des moyens (14) de détection d'au moins un réseau public (2, 3) ;
- des moyens (13) de configuration pour privilégier son attachement à un réseau cellulaire public (2, 3) par rapport à son attachement à un réseau local (4) ;
- des moyens (14) de mesure du niveau de signal (Lev21, Lev22, Lev32, Lev33) des cellules (21, 22, 32, 33) de réseaux cellulaires publics (2, 3) voisines de ladite cellule (41) d'attachement ; ce terminal étant **caractérisé en ce qu'**il comporte également:
- des moyens (11) de comparaison dudit niveau avec un seuil prédéterminé ; et si au moins un desdits niveaux mesurés (Lev21, Lev22, Lev32, Lev33) est supérieur à un seuil,
- des moyens (15) de déclenchement de transfert de connexion par envoi audit point d'accès (40) desdits niveaux de signaux mesurés (Lev21, Lev22, Lev32, Lev33), ces niveaux (Lev21, Lev22, Lev32, Lev33) étant utilisés par ledit réseau local (4) pour gérer le transfert de connexion dudit terminal (10) vers une desdites cellules voisines (21, 22, 32, 33) pour garantir une continuité de service en situation de mobilité dudit terminal (10).

11. Programme d'ordinateur comportant des instructions pour l'exécution des étapes du procédé de déclenchement selon la revendication 9 lorsque ledit programme est exécuté par un ordinateur.

12. Support d'enregistrement (12) lisible par un ordinateur sur lequel est enregistré un programme d'ordinateur comprenant des instructions pour l'exécution des étapes du procédé de déclenchement selon la revendication 9.

**Claims**

1. Method of allotting a signal level that can be implemented in a mobile terminal (10) connected to a base station (20) making it possible to define a cell (21, 31) of attachment of the said terminal (10) to an attachment public cellular network (2, 3), the terminal (10) being configured so as to favour its attachment to a public cellular network (2, 3) with respect to its attachment to a local network (4), this method comprising;

   - a step of detecting the presence of an active access point (40) of a local network (4), and if appropriate, a step (E30, E40) of allotting a dummy signal level (Lev41) to a cell (41) defined at least by the said access point (40);
   - a step (E55) of measuring the signal level (Lev21, Lev22, Lev32) of the said attachment cell (21, 31) and of the cells (22, 32), of public cellular networks (2, 3), which neighbour the said attachment cell (21, 31);
   - a step (E60) of dispatching, to the said base station (20), the said dummy signal level (Lev41) and the said measured signal levels (Lev21, Lev22, Lev32), these levels (Lev41, Lev21, Lev22, Lev32) being used by the said attachment network (2, 3) to manage the transfer of connection of the said terminal (10) from the said attachment cell (21, 31) to one of the said neighbouring cells (22, 32) or to the said cell (41) defined at least by the said access point (40), so as to guarantee continuity of service in a situation of mobility of the said terminal (10),

   the said method being **characterized in that** the said dummy signal level (Lev41) is allotted as a function of a threshold (T_GERAN) stored in the said terminal, this threshold (T_GERAN) being a threshold on the basis of which a cell (22, 32) of a public cellular network (2, 3) may be a candidate for the said transfer of connection.

2. Method of allotting according to Claim 1, in which the said attachment cell (31) is a cell of a UTRAN public cellular network (3) and in which the cell (41) defined at least by the said access point (40) is considered to be a cell of a GERAN public cellular network (2), **characterized in that** the said dummy signal level Lev41 is chosen such that:

$$\text{T\_GERAN} \leq \text{Lev41} \leq \max\ [\text{T\_GERAN},\ \min(\text{List\_GERAN}) - 1],$$

   where:

   T_GERAN is a threshold level on the basis of which a cell (21, 22) of a GERAN public cellular network (2) may be a candidate for the said transfer of connection;

   - List_GERAN is the set of signal levels of the cells of a GERAN public cellular network (2) which neighbour the said attachment cell (31) and whose signal level is greater than T_GERAN; and
   - min(List_GERAN) is the minimum value of the set List_GERAN.

3. Method of allotting according to Claim 1, in which the said attachment cell (21) is a cell of a GERAN public cellular network not possessing any neighbouring cell (32) of a UTRAN public cellular network (3) whose signal level (Lev32) is greater than or equal to a threshold (T_UTRAN) on the basis of which a cell (32) of a UTRAN public cellular network (3) may be a candidate for the said transfer of connection, and in which the cell (41) defined at least by the said access point (40) is considered to be a cell of a GERAN public cellular network (2) **characterized in that** the said dummy signal level Lev41 is chosen such that:

$$\text{T\_GERAN} \leq \text{Lev41} \leq \max\ [\text{T\_GERAN},\ \min(\text{List\_GERAN}) - 1],$$

where:

T_GERAN is a threshold level on the basis of which a cell (21, 22) of a GERAN public cellular network (2) may be a candidate for the said transfer of connection; and

- List_GERAN is the set of signal levels of the cells of a GERAN public cellular network (2) which neighbour the said attachment cell (21) and whose signal level is greater than T_GERAN; and
- min(List_GERAN) is the minimum value of the set List_GERAN.

4. Method of allotting according to Claim 1, in which the said attachment cell (21) is a cell of a GERAN public cellular network possessing at least one neighbouring cell (32) of a UTRAN public cellular network (3) whose signal level (Lev32) is greater than or equal to a threshold (T_UTRAN) on the basis of which a cell (32) of a UTRAN public cellular network (3) may be a candidate for the said transfer of connection, and in which the cell (41) defined at least by the said access point (40) is considered to be a cell of a GERAN public cellular network (2), **characterized in that** the said dummy signal level Lev41 is chosen such that:

$$Lev41 < T\_GERAN,$$

where:

T_GERAN is a threshold level on the basis of which a cell (20, 22) of a GERAN public cellular network (2) may be a candidate for the said transfer of connection.

5. Method of allotting according to any one of Claims 1 to 4, **characterized in that** it comprises a step of receiving the said threshold (T_GERAN) originating from the said attachment network (2, 3).

6. Mobile terminal comprising:

- means (14) for connecting to a base station (20) making it possible to define a cell (21) of attachment of the said terminal (10) to an attachment public cellular network (2);
- means (15) for connecting to an access point (40) making it possible to define a cell (41) of attachment of the said terminal (10) to a local network (4);
- means (13) of configuration for favouring its attachment to a public cellular network (2, 3) with respect to its attachment to a local network (4);
- means (15) for detecting the presence of at least one active access point (40) of a local network (4);
- means (11) for allotting a dummy signal level (Lev41) to a cell (41) defined at least by the said access point (40);
- means (14) for measuring the signal level (Lev21, Lev22, Lev32) of the said attachment cell (21) and of the cells (22, 32), of public cellular networks (2, 3), which neighbour the said attachment cell (21);
- means (14) for dispatching, to the said base station (20), the said dummy signal level (Lev41) and the said measured signal levels (Lev21, Lev22, Lev32), these levels (Lev41, Lev21, Lev22, Lev32) being used by the said attachment network (2) to manage the transfer of connection of the said terminal (10) from the said attachment cell (21, 31) to one of the said neighbouring cells (22, 32) or to the said cell (41) defined at least by the said access point (40), so as to guarantee continuity of service in a situation of mobility of the said terminal (10),

the said terminal (10) being **characterized in that** the said dummy signal level (Lev41) is allotted as a function of a threshold (T_GERAN) stored in the said terminal, this threshold (T_GERAN) being a threshold on the basis of which a cell (22, 32) of a public cellular network (2, 3) may be a candidate for the said transfer of connection.

7. Computer program comprising instructions for the execution of the steps of the method of allotting a signal level according to any one of Claims 1 to 5 when the said program is executed by a computer.

8. Recording medium readable by a computer on which is recorded a computer program comprising instructions for the execution of the steps of the method of allotting a signal level according to any one of Claims 1 to 5.

9. Method of triggering a transfer of connection that can be implemented in a mobile terminal (10) connected to an access point (40) making it possible to define a cell (41) of attachment of the said terminal (10) to a local network (4), the terminal (10) being configured so as to favour its attachment to a public cellular network (2, 3) with respect to its attachment to a local network (4), this method comprising:

- a step of detecting at least one public cellular network;
- a step (E65) of measuring the signal level (Lev21, Lev22, Lev32, Lev33) of the cells (21, 22, 32, 33), of public cellular networks (2, 3), which neighbour the said attachment cell (41); this method being **characterized in that** it also comprises:
- a step (E70) of comparing the said measured levels with a predetermined threshold on the basis of which a cell (22, 32) of a public cellular network (2, 3) may be a candidate for the said transfer of connection; and if at least one of the said measured levels (Lev21, Lev22, Lev32, Lev33) is greater than the said threshold,
- a step (E75) of triggering transfer of connection by dispatching the said measured signal levels (Lev21, Lev22, Lev32, Lev33) to the said access point (40), these levels (Lev21, Lev22, Lev32, Lev33) being used by the said local network (4) to manage the transfer of connection of the said terminal (10) to one of the said neighbouring cells (21, 22, 32, 33) so as to guarantee continuity of service in a situation of mobility of the said terminal (10).

**10.** Mobile terminal (10) comprising:

- means (15) for connecting to an access point (40) making it possible to define a cell (41) of attachment of the said terminal (10) to a local network (4);
- means (14) for connecting to a base station (20) making it possible to define a cell (21) of attachment of the said terminal (10) to an attachment public cellular network (2);
- means (14) for detecting at least one public network (2, 3);
- means (13) of configuration for favouring its attachment to a public cellular network (2, 3) with respect to its attachment to a local network (4);
- means (14) for measuring the signal level (Lev21, Lev22, Lev32, Lev33) of the cells (21, 22, 32, 33), of public cellular networks (2, 3), which neighbour the said attachment cell (41); this terminal being **characterized in that** it also comprises:
- means (11) for comparing the said level with a predetermined threshold; and if at least one of the said measured levels (Lev21, Lev22, Lev32, Lev33) is greater than a threshold,
- means (15) for triggering transfer of connection by dispatching the said measured signal levels (Lev21, Lev22, Lev32, Lev33) to the said access point (40), these levels (Lev21, Lev22, Lev32, Lev33) being used by the said local network (4) to manage the transfer of connection of the said terminal (10) to one of the said neighbouring cells (21, 22, 32, 33) so as to guarantee continuity of service in a situation of mobility of the said terminal (10).

**11.** Computer program comprising instructions for the execution of the steps of the triggering method according to Claim 9 when the said program is executed by a computer.

**12.** Recording medium (12) readable by a computer on which is recorded a computer program comprising instructions for the execution of the steps of the triggering method according to Claim 9.

**Patentansprüche**

**1.** Verfahren zur Zuweisung eines Signalpegels, das in einem mit einer Basisstation (20) verbundenen mobilen Endgerät (10) durchgeführt werden kann, die es ermöglicht, eine Anbindungszelle (21, 31) des Endgeräts (10) an ein öffentliches zellulares Anbindungsnetzwerk (2, 3) zu definieren, wobei das Endgerät (10) konfiguriert ist, um seine Anbindung an ein öffentliches zellulares Netzwerk (2, 3) bezüglich seiner Anbindung an ein lokales Netzwerk (4) zu bevorzugen, wobei dieses Verfahren aufweist:

- einen Schritt der Erfassung des Vorhandenseins eines aktiven Zugangspunkts (40) eines lokalen Netzwerks (4), und ggf. einen Schritt (E30, E40) der Zuweisung eines fiktiven Signalpegels (Lev41) zu einer Zelle (41), die mindestens durch den Zugangspunkt (40) definiert wird;
- einen Schritt (E55) der Messung des Signalpegels (Lev21, Lev22, Lev32) der Anbindungszelle (21, 31) und der Zellen (22, 32) von öffentlichen zellularen Netzwerken (2, 3), die der Anbindungszelle (21, 31) benachbart sind;
- einen Schritt (E60) des Sendens des fiktiven Signalpegels (Lev41) und der gemessenen Signalpegel (Lev21, Lev22, Lev32) an die Basisstation (20), wobei diese Pegel (Lev41, Lev21, Lev22, Lev32) von dem Anbindungsnetzwerk (2, 3) verwendet werden, um das Verbindungs-Handover des Endgeräts (10) von der Anbindungszelle

EP 1 972 176 B1

(21, 31) zu einer der benachbarten Zellen (22, 32) oder zu der Zelle (41) zu verwalten, die mindestens durch den Zugangspunkt (40) definiert wird, um eine Dienstkontinuität in einer Mobilitätssituation des Endgeräts (10) zu garantieren,

wobei das Verfahren **dadurch gekennzeichnet ist, dass** der fiktive Signalpegel (Lev41) abhängig von einer Schwelle (T_GERAN) zugewiesen wird, die in dem Endgerät gespeichert ist, wobei diese Schwelle (T_GERAN) eine Schwelle ist, von der ausgehend eine Zelle (22, 32) eines öffentlichen zellularen Netzwerks (2, 3) Kandidat für das Verbindungs-Handover sein kann.

2. Zuweisungsverfahren nach Anspruch 1, bei dem die Anbindungszelle (31) eine Zelle eines öffentlichen zellularen Netzwerks UTRAN (3) ist, und bei dem die durch mindestens den Zugangspunkt (40) definierte Zelle (41) als eine Zelle eines öffentlichen zellularen Netzwerks GERAN (2) angesehen wird, **dadurch gekennzeichnet, dass** der fiktive Signalpegel Lev41 so gewählt wird, dass gilt:

$$T\_GERAN \leq Lev41 \leq max\ [T\_GERAN,\ min(List\_GERAN) - 1],$$

wobei:

T_GERAN ein Schwellenpegel ist, von dem ausgehend eine Zelle (21, 22) eines öffentlichen zellularen Netzwerks GERAN (2) Kandidat für das Verbindungs-Handover sein kann;

- List_GERAN die Gesamtheit der Signalpegel der Zellen eines öffentlichen zellularen Netzwerks GERAN (2) ist, die der Anbindungszelle (31) benachbart sind und deren Signalpegel höher ist als T_GERAN; und
- min(List_GERAN) der Mindestwert der Gesamtheit List_GERAN ist.

3. Zuweisungsverfahren nach Anspruch 1, bei dem die Anbindungszelle (21) eine Zelle eines öffentlichen zellularen Netzwerks GERAN ist, die keine benachbarte Zelle (32) eines öffentlichen zellularen Netzwerks UTRAN (3) besitzt, deren Signalpegel (Lev32) höher als eine oder gleich einer Schwelle (T_UTRAN) ist, von der ausgehend eine Zelle (32) eines öffentlichen zellularen Netzwerks UTRAN (3) Kandidat für das Verbindungs-Handover sein kann, und bei dem die durch mindestens den Zugangspunkt (40) definierte Zelle (41) als eine Zelle eines öffentlichen zellularen Netzwerks GERAN (2) angesehen wird, **dadurch gekennzeichnet, dass** der fiktive Signalpegel Lev41 so gewählt wird, dass gilt:

$$T\_GERAN \leq Lev41 \leq max\ [T\_GERAN,\ min(List\_GERAN) - 1],$$

wobei:

T_GERAN ein Schwellenpegel ist, von dem ausgehend eine Zelle (21, 22) eines öffentlichen zellularen Netzwerks GERAN (2) Kandidat für das Verbindungs-Handover sein kann; und

- List_GERAN die Gesamtheit der Signalpegel der Zellen eines öffentlichen zellularen Netzwerks GERAN (2) ist, die der Anbindungszelle (21) benachbart sind und deren Signalpegel höher ist als T_GERAN ; und
- min(List_GERAN) der Mindestwert der Gesamtheit List_GERAN ist.

4. Zuweisungsverfahren nach Anspruch 1, bei dem die Anbindungszelle (21) eine Zelle eines öffentlichen zellularen Netzwerks GERAN ist, die mindestens eine benachbarte Zelle (32) eines öffentlichen zellularen Netzwerks UTRAN (3) besitzt, deren Signalpegel (Lev32) höher als eine oder gleich einer Schwelle (T_UTRAN) ist, von der ausgehend eine Zelle (32) eines öffentlichen zellularen Netzwerks UTRAN (3) Kandidat für das Verbindungs-Handover sein kann, und bei dem die mindestens durch den Zugangspunkt (40) definierte Zelle (41) als eine Zelle eines öffentlichen zellularen Netzwerks GERAN (2) angesehen wird, **dadurch gekennzeichnet, dass** der fiktive Signalpegel Lev41 so gewählt wird, dass gilt:

EP 1 972 176 B1

$$\text{Lev41} \leq \text{T\_GERAN},$$

wobei:

T_GERAN ein Schwellenpegel ist, von dem ausgehend eine Zelle (20, 22) eines öffentlichen zellularen Netzwerks GERAN (2) Kandidat für das Verbindungs-Handover sein kann.

**5.** Zuweisungsverfahren nach einem der Ansprüche 1 bis 4, **dadurch gekennzeichnet, dass** es einen Schritt des Empfangs der Schwelle (T_GERAN) vom Anbindungsnetzwerk (2, 3) aufweist.

**6.** Mobiles Endgerät, das aufweist:

- Einrichtungen (14) zur Verbindung mit einer Basisstation (20), die es ermöglicht, eine Anbindungszelle (21) des Endgeräts (10) an ein öffentliches zellulares Anbindungs-Netzwerk (2) zu definieren;
- Einrichtungen (15) zur Verbindung mit einem Zugangspunkt (40), der es ermöglicht, eine Anbindungszelle (41) des Endgeräts (10) an ein lokales Netzwerk (4) zu definieren;
- Konfigurationseinrichtungen (13), um seine Anbindung an ein öffentliches zellulares Netzwerk (2, 3) bezüglich seiner Anbindung an ein lokales Netzwerk (4) zu bevorzugen;
- Einrichtungen (15) zur Erfassung des Vorhandenseins mindestens eines aktiven Zugangspunkts (40) eines lokalen Netzwerks (4);
- Einrichtungen (11) zur Zuweisung eines fiktiven Signalpegels (Lev41) zu einer durch mindestens den Zugangspunkt (40) definierten Zelle (41);
- Einrichtungen (14) zur Messung des Signalpegels (Lev21, Lev22, Lev32) der Anbindungszelle (21) und der Zellen (22, 32) von öffentlichen zellularen Netzwerken (2, 3), die der Anbindungszelle (21) benachbart sind;
- Einrichtungen (14) zum Senden des fiktiven Signalpegels (Lev41) und der gemessenen Signalpegel (Lev21, Lev22, Lev32) an die Basisstation (20), wobei diese Pegel (Lev41, Lev21, Lev22, Lev32) vom Anbindungsnetzwerk (2) verwendet werden, um das Verbindungs-Handover des Endgeräts (10) von der Anbindungszelle (21, 31) zu einer der benachbarten Zellen (22, 32) oder zu der durch mindestens den Zugangspunkt (40) definierten Zelle (41) zu verwalten, um eine Dienstkontinuität in einer Mobilitätssituation des Endgeräts (10) zu garantieren,

wobei das Endgerät (10) **dadurch gekennzeichnet ist, dass** der fiktive Signalpegel (Lev41) abhängig von einer im Endgerät gespeicherten Schwelle (T_GERAN) zugewiesen wird, wobei diese Schwelle (T_GERAN) eine Schwelle ist, von der ausgehend eine Zelle (22, 32) eines öffentlichen zellularen Netzwerks (2, 3) Kandidat für das Verbindungs-Handover sein kann.

**7.** Computerprogramm, das Anweisungen zur Ausführung der Schritte des Zuweisungsverfahrens eines Signalpegels nach einem der Ansprüche 1 bis 5 aufweist, wenn das Programm von einem Computer ausgeführt wird.

**8.** Computerlesbarer Aufzeichnungsträger, auf dem ein Computerprogramm aufgezeichnet ist, das Anweisungen zur Ausführung der Schritte des Zuweisungsverfahrens eines Signalpegels nach einem der Ansprüche 1 bis 5 enthält.

**9.** Verfahren zum Start eines Verbindungs-Handovers, das in einem mobilen Endgerät (10) durchgeführt werden kann, das mit einem Zugangspunkt (40) verbunden ist, der es ermöglicht, eine Anbindungszelle (41) des Endgeräts (10) an ein lokales Netzwerk (4) zu definieren, wobei das Endgerät (10) konfiguriert ist, um seine Anbindung an ein öffentliches zellulares Netzwerk (2, 3) bezüglich seiner Anbindung an ein lokales Netzwerk (4) zu bevorzugen, wobei dieses Verfahren enthält:

- einen Schritt der Erfassung mindestens eines öffentlichen zellularen Netzwerks;
- einen Schritt (E65) der Messung des Signalpegels (Lev21, Lev22, Lev32, Lev33) der Zellen (21, 22, 32, 33) von öffentlichen zellularen Netzwerken (2, 3), die der Anbindungszelle (41) benachbart sind;

wobei dieses Verfahren **dadurch gekennzeichnet ist, dass** es ebenfalls aufweist:

- einen Schritt (E70) des Vergleichs der gemessenen Pegel mit einer vorbestimmten Schwelle, von der ausgehend eine Zelle (22, 32) eines öffentlichen zellularen Netzwerks (2, 3) Kandidat für das Verbindungs-Handover sein kann; und wenn mindestens einer der gemessenen Pegel (Lev21, Lev22, Lev32, Lev33) höher ist als die Schwelle,
- einen Schritt (E75) des Starts des Verbindungs-Handovers durch Senden der gemessenen Signalpegel (Lev21, Lev22, Lev32, Lev33) an den Zugangspunkt (40), wobei diese Pegel (Lev21, Lev22, Lev32, Lev33) vom lokalen Netzwerk (4) verwendet werden, um das Verbindungs-Handover des Endgeräts (10) zu einer der benachbarten Zellen (21, 22, 32, 33) zu verwalten, um eine Dienstkontinuität in einer Mobilitätssituation des Endgeräts (10) zu garantieren.

10. Mobiles Endgerät (10), das aufweist:

- Einrichtungen (15) zur Verbindung mit einem Zugangspunkt (40), der es ermöglicht, eine Anbindungszelle (41) des Endgeräts (10) an ein lokales Netzwerk (4) zu definieren;
- Einrichtungen (14) zur Verbindung mit einer Basisstation (20), die es ermöglicht, eine Anbindungszelle (21) des Endgeräts (10) an ein öffentliches zellulares Anbindungs-Netzwerk (2) zu definieren;
- Einrichtungen (14) zur Erfassung mindestens eines öffentlichen Netzwerks (2, 3);
- Konfigurationseinrichtungen (13), um seine Anbindung an ein öffentliches zellulares Netzwerk (2, 3) bezüglich seiner Anbindung an ein lokales Netzwerk (4) zu bevorzugen;
- Einrichtungen (14) zur Messung des Signalpegels (Lev21, Lev22, Lev32, Lev33) der Zellen (21, 22, 32, 33) von öffentlichen zellularen Netzwerken (2, 3), die der Anbindungszelle (41) benachbart sind;

wobei dieses Endgerät **dadurch gekennzeichnet ist, dass** es ebenfalls aufweist:

- Einrichtungen (11) zum Vergleich des Pegels mit einer vorbestimmten Schwelle; und wenn mindestens einer der gemessenen Pegel (Lev21, Lev22, Lev32, Lev33) höher ist als eine Schwelle,
- Einrichtungen (15) zum Start eines Verbindungs-Handovers durch Senden der gemessenen Signalpegel (Lev21, Lev22, Lev32, Lev33) an den Zugangspunkt (40), wobei diese Pegel (Lev21, Lev22, Lev32, Lev33) von dem lokalen Netzwerk (4) verwendet werden, um das Verbindungs-Handover des Endgeräts (10) zu einer der benachbarten Zellen (21, 22, 32, 33) zu verwalten, um eine Dienstkontinuität in einer Mobilitätssituation des Endgeräts (10) zu garantieren.

11. Computerprogramm, das Anweisungen zur Ausführung der Schritte des Startverfahrens nach Anspruch 9 aufweist, wenn das Programm von einem Computer ausgeführt wird.

12. Computerlesbarer Aufzeichnungsträger (12), auf dem ein Computerprogramm aufgezeichnet ist, das Anweisungen zur Ausführung der Schritte des Startverfahrens nach Anspruch 9 enthält.

EP 1 972 176 B1

FIG.1

FIG.2

FIG.3